# EUROPEAN PATENT SPECIFICATION

(11) **EP 3 869 075 B1**
(45) Date of publication and mention of the grant of the patent: **26.10.2022**
(21) Application number: 19873117.6
(22) Date of filing: 26.03.2019
(51) Int. Cl.: F16K 15/02, F04B 53/10, F04B 53/16

(54) **VALVE PLUG, HIGH-PRESSURE PUMP STRUCTURE, AND VALVE PLUG SEALING METHOD**
VENTILSTOPFEN, HOCHDRUCKPUMPENSTRUKTUR UND VENTILSTOPFENDICHTUNGSVERFAHREN
OPERCULE DE VANNE, STRUCTURE DE POMPE À HAUTE PRESSION ET PROCÉDÉ D'ÉTANCHÉITÉ D'OPERCULE DE VANNE

(30) Priority: 19.10.2018 CN 201811221224
(43) Date of publication of application: 25.08.2021
(73) Proprietor: Huizhou Hydro Caresys Medical Co. Ltd, Huizhou, Guangdong 516083 (CN)
(72) Inventor: WU, Yan, Huizhou, Guangdong 516083 (CN); SUN, Guangyu, Huizhou, Guangdong 516083 (CN)
(74) Representative: Meyer, Thorsten
(86) International application number: PCT/CN2019/079604
(87) International publication number: WO 2020/077949

(56) References cited:
- US-A- 2 163 472
- US-A1- 2015 272 605

## Description

### TECHNICAL FIELD

The present invention relates to a valve plug, a high-pressure pump structure including the valve plug, and a rapid self-sealing method for a valve plug based on the high-pressure pump structure.

### BACKGROUND

In the prior art, in order to meet the needs of medical sterilization conditions and high pressure performance, a plunger pump is usually used, and a valve in the pump body also needs to have a simple structure. In the existing valves of pump bodies, a steel ball seal or a spring preloaded valve plate is usually used as the main sealing body of the valves. The existing spring-preloaded valve plate products usually have the following problems: on the one hand, the structures are complex due to use of springs, and a die chamber is prone to be formed which results in incomplete sterilization; on the other hand, the performance requirements of the spring are very high, and it is difficult to judge the effectiveness under high pressures. Therefore, the existing spring-preloaded valve plate products are very risky to use as medical products. The use of steel balls as the valve sealing body realizes self-sealing function based on the pressure of the flow medium. However, there is another problem: the sealing achieved by steel balls as spheres driven by flowing medium has poor reversing efficiency, which leads to excessive medium leakage and poor sealing effect in the sealing process by steel balls. Furthermore, US2163472A discloses a valve for pumps for pumping mud and similar abrasive materials, which has an upper valve stem 11 and a lower valve stem 12 mounted on a valve seat 13, and US2015272605A concerns a valve closure member 37 having a plate portion 38 which has a slightly convexly curved sealing face and is provided at its periphery with an axially protruding annular edge 39, between the edge 39 and a central hub portion 40, the plate portion 38 preferably has an annular spring zone 41.

### SUMMARY

An objective of the invention is to provide a valve plug, a high-pressure pump structure comprising the valve plug, and a valve plug sealing method based on the high-pressure pump structure. The valve plug has a simple structure, which shortens the response time of the valve plug and achieves rapid sealing.

In order to achieve the abovementioned objective, a valve plug is provided in a first aspect of the invention, wherein one end surface of a valve plug body is configured as a sealing surface, and the other end surface of the valve plug body facing away from the sealing surface is provided with a step; and an outer diameter of the valve plug body gradually increases from the one end surface to the other end surface of the valve plug body, wherein both ends of the valve plug body are respectively provided with a positioning boss extending outward along a central axis of the valve plug body, the sealing surface is provided with a first positioning boss and the other end surface of the valve plug body facing away the sealing surface is provided with a second positioning boss, and the other end surface of the valve plug body facing away from the sealing surface is provided with a recess, and the second positioning boss is provided with a groove communicating with the recess.

In a preferable embodiment, the valve plug body as a whole has a circular truncated cone shape.

In a preferable embodiment, the sealing surface of the valve plug body is one of a flat surface, a spherical surface and a conical surface.

Based on the same objective, a high-pressure pump structure is provided in a second aspect of the invention. The high-pressure pump structure includes a pump body and at least one valve plug above; the pump body is provided with one or more liquid inlet channels and one or more liquid outlet channels which are communicated through one or more valve plug chambers; and an inner diameter of the valve plug chamber is larger than that of the liquid inlet channel and the liquid outlet channel; the valve plug is slidably disposed in the valve plug chamber, an maximum outer diameter of the valve plug is larger than inner diameters of the liquid inlet channel and the liquid outlet channel and smaller than the inner diameter of the valve plug chamber; a first positioning boss is inserted into the liquid inlet channel, the second positioning boss is inserted into the liquid outlet channel, an outer diameter of the first positioning boss is smaller than the inner diameter of the liquid inlet channel, and an outer diameter of the second positioning boss is smaller than the inner diameter of the liquid outlet channel; and when a sealing surface of the valve plug is in tight contact with an end surface of the valve plug chamber close to the liquid inlet channel, communication between the liquid inlet channel and the liquid outlet channel is cut off; and when the sealing surface of the valve plug is far away from the end surface of the valve plug chamber close to the liquid inlet channel, an end surface of a step abuts against the other end surface of the valve plug chamber, and the liquid inlet channel and the liquid outlet channel communicate with each other.

In a preferable embodiment, there are two liquid inlet channels and two liquid outlet channels within the pump body, the two liquid inlet channels are a first liquid inlet channel and a second liquid inlet channel, and the two liquid outlet channels are a first liquid outlet channel and a second liquid outlet channel; the first liquid inlet channel and the first liquid outlet channel communicate through a first valve plug chamber, and the second liquid inlet channel and the second liquid outlet channel communicate through a second valve plug chamber; one or more piston chambers are also provided within the pump body, and the first liquid outlet channel and the second liquid inlet channel are both in communication with the piston chamber; and the high-pressure pump structure includes two valve plugs, i.e., a first valve plug and a second valve plug, the first valve plug is disposed in the first valve plug chamber, and the second valve plug is disposed in the second valve plug chamber.

In a preferable embodiment, a first installation chamber communicating with the first liquid outlet channel is provided in the pump body, and a liquid inlet tube is inserted into the first installation chamber, an interior of the liquid inlet tube constitutes the first liquid inlet channel, and the first valve plug chamber is defined between a bottom wall of the first installation chamber and an end surface of the liquid inlet tube; and a second installation chamber communicating with the second liquid inlet channel is further provided in the pump body, a liquid outlet tube is inserted into the second installation chamber, an interior of the liquid outlet tube constitutes the second liquid outlet channel, and the second valve plug chamber is defined between a bottom wall of the second installation chamber and an end surface of the liquid outlet tube.

In a preferable embodiment, a fixing sleeve is further connected to outer sides of the liquid inlet tube and the liquid outlet tube, and the fixing sleeve is sleeved outside the pump body.

In a preferable embodiment, the pump body is provided with at least two piston chambers, and the first liquid inlet channel, the first liquid outlet channel, the second liquid inlet channel, and the second liquid outlet channel provided in the pump body correspond to the piston chambers; and the first liquid inlet channels communicate through a water inlet connector, and the second liquid outlet channels communicate through a water outlet connector.

Similarly, a valve plug sealing method based on the high-pressure pump structure above is provided in a third aspect of the invention. The valve plug sealing method comprises the following steps: when fluid pressure in a liquid outlet channel is lower than fluid pressure in a liquid inlet channel, fluid impacts the valve plug to slide towards the liquid outlet channel, and an end surface of a step abuts against a bottom wall of a valve plug chamber close to the liquid outlet channel, so that there is a gap between an end surface of a valve plug body facing away from a sealing surface and the bottom wall of the valve plug chamber, and the fluid in the liquid outlet channel respectively flows through the valve plug chamber, a recess, and a groove, respectively, and finally into the liquid outlet channel, until the fluid pressure in the liquid outlet channel is balanced with the fluid pressure in the liquid inlet channel; and when the fluid pressure in the liquid outlet channel is lower than the fluid pressure in the liquid inlet channel, the fluid impacts the valve plug to slide towards the liquid inlet channel; when the fluid flows through the end surface of the valve plug body facing away from the sealing surface, a flow direction of the fluid is changed by 60 ° ~ 150 °, the fluid in a direction of a central axis of the valve plug body transfers momentum to the valve plug, so that the sealing surface of the valve plug closely adheres to the bottom wall of the valve plug chamber, and communication between the liquid inlet channel and the liquid outlet channel is cut off.

The present invention provides a valve plug, a high-pressure pump structure including the same, and a valve plug sealing method based on the high-pressure pump structure. The valve plug body is integrally configured in a shape whose outer diameter gradually increases from the one end of the sealing surface to the other end, and the sealing surface may be a spherical surface, a conical surface or a flat surface, etc. The structure of the valve plug can improve the energy transmission efficiency of the fluid, shorten the response time of the valve plug, and achieve rapid sealing. In addition, the sealing surface can be configured in a variety of shapes, which can reduce the requirements for machining precision.

### BRIEF DESCRIPTION OF DRAWINGS

FIG. 1 is a schematic cross-sectional structure diagram of a valve plug according to an embodiment of the invention;
FIG. 2 is a schematic cross-sectional structure diagram of a high-pressure pump structure according to an embodiment of the invention;
FIG. 3 is a cross-sectional view taken along line A-A of FIG. 2;
FIG. 4 is a cross-sectional view taken along line B-B of FIG. 2;
FIG. 5 is a partial schematic diagram of a piston chamber of a high-pressure pump structure of the invention in a high-pressure state; and
FIG. 6 is a partial schematic diagram of a piston chamber of a high-pressure pump structure of the invention in a negative pressure state.

List of Reference signs: 10, valve plug; 11, valve plug body; 111, sealing surface; 112, recess; 12, step; 13, first positioning boss; 14, second positioning boss; 141, groove; 20, pump body; 21, first liquid inlet channel; 22, first valve plug chamber; 23, first liquid outlet channel; 24, second liquid inlet channel; 25, second valve plug chamber; 26, second liquid outlet channel; 27, piston chamber; 30, first valve plug; 40, second valve plug; 50, liquid inlet tube; 60, liquid outlet tube; 70, fixing sleeve; 80, water inlet joint; and 90, water outlet joint.

### DETAILED DESCRIPTION

Hereafter, the specific implementation of the invention will be described in further detail in conjunction with the accompanying drawings and embodiments. The following embodiments are used to illustrate the invention, but not to limit the scope of the invention.

It should be noted that the orientations or positional relationships indicated by the terms "upper", "lower", "left", "right", "top", "bottom", etc. as used in the specification the invention are based on the orientations or positional relationships shown in the accompanying drawings, which terms are only for the convenience of describing the invention and simplifying the description, rather than indicating or implying that the pointed devices or elements must have be specific orientations or be configured or operated in specific orientations, and therefore cannot be construed as a limitation of the invention. It should be understood that the terms "first", "second", etc. as used in the invention to describe various information, are used to distinguish the same type of information from each other, and the information should not be limited to these terms. For example, without departing from the scope of the invention, the "first" information may also be referred to as the "second" information, and similarly, the "second" information may also be referred to as the "first" information.

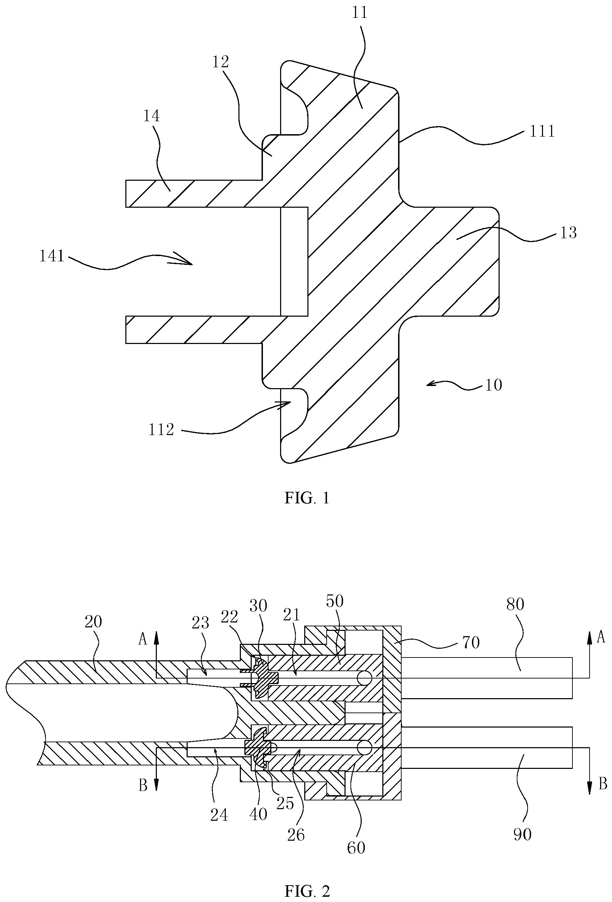

Refer to FIG. 1. A valve plug 10 is provided in a first aspect of the invention, which comprises a valve plug body 11. One end surface of the valve plug body 11 is configured as a sealing surface 111, and the other end surface of the valve plug body 11 facing away from the sealing surface 111 is provided with a step 12. The valve plug body 11 is bowl-shaped as a whole, and an outer diameter of the valve plug body 11 gradually increases from the one end surface to the other end surface of the valve plug body 11. In this embodiment, the valve plug body 11 is configured in a shape with a gradually increasing outer diameter from the one end surface of the sealing surface to the other end surface. The unique shape of the outer contour of the valve plug 10 can reduce the resistance when the fluid flows from a liquid inlet channel to a liquid outlet channel, improve energy transmission of the fluid in the sealing process, and improve the sealing efficiency of the valve plug 10, so that the response time of the valve plug 10 can be shortened. In addition, the valve plug 10 has a simple structure and is less difficult to manufacture.

Preferably, the valve plug body 11 in this embodiment is configured as a circular truncated cone shape with a gradually increasing outer diameter from the one end surface of the sealing surface 111 to the other end surface.

Further, in this embodiment, the sealing surface 111 of the valve plug body 11 is a flat surface. The use of a flat surface for sealing can reduce the machining requirements and machining accuracy, avoid leakage caused by unqualified machining due to the use of a tapered surface for sealing and high precision requirements, and increase reliability of the sealing. The sealing by using a flat surface has improved response speed as the sealing by using a tapered surface requires a mating time.

As another example, the sealing surface 111 of the valve plug body 11 may also be a conical surface or a spherical surface, which can make the sealing effect better. The sealing surface 111 can be configured as a spherical surface, a conical surface, a flat surface or other shape, which can simplify the machining process while ensuring the sealing effect.

Based on the above technical solution, in the valve plug 10 provided according to this embodiment, in order to prevent the valve plug 10 from deflecting or getting stuck in the sliding process to cause poor sealing effect, at least one end of the valve plug body 11 is provided with a positioning boss extending outward along a central axis of the valve plug body 11.

Specifically, in this embodiment, both ends of the valve plug body 11 are provided with positioning bosses in order to guide the valve plug 10 to slide smoothly in the valve plug chamber. For ease of description, the sealing surface 111 is provided with a first positioning boss 13, and the other end surface of the valve plug body 11 facing away the sealing surface 111 is provided with a second positioning boss 14. The other end surface of the valve plug body 11 facing away from the sealing surface 111 is provided with a recess 112, and the second positioning boss 14 is provided with a groove 141 communicating with the recess 112.

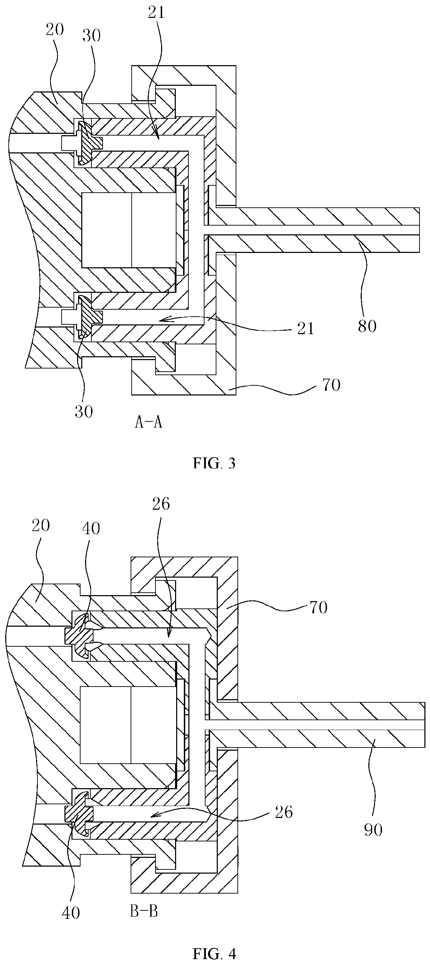

For the same purpose, a high-pressure pump structure is also provided according to a preferred embodiment of a second aspect of the invention. The specific structure is shown in FIGs. 2 to 6. The high-pressure pump structure includes a pump body 20 and any one valve plug 10 described above. The pump body 20 is provided with one or more liquid inlet channels and one or more liquid outlet channels which are communicated through one or more valve plug chambers. The inner diameter of the valve plug chamber is larger than that of the liquid inlet channel and the liquid outlet channel. The valve plug 10 can be slidably disposed in the valve plug chamber. The maximum outer diameter of the valve plug 10 is larger than the inner diameters of the liquid inlet channel and the liquid outlet channel, and is smaller than the inner diameter of the valve plug chamber. The first positioning boss 13 is inserted into the liquid inlet channel, and the second positioning boss 14 is inserted into the liquid outlet channel. The outer diameter of the first positioning boss 13 is smaller than the inner diameter of the liquid inlet channel, and the outer diameter of the second positioning boss 14 is smaller than the inner diameter of the liquid outlet channel. When the sealing surface 111 of the valve plug 10 is in tight contact with the end surface of the valve plug chamber close to the liquid inlet channel, the communication between the liquid inlet channel and the liquid outlet channel is cut off. When the sealing surface 111 of the valve plug 10 is far away from the end surface of the valve plug chamber close to the liquid inlet channel, the end surface of the step 12 is in tight contact with the other end surface of the valve plug chamber, and the liquid inlet channel and the liquid outlet channel communicate with each other. The high-pressure pump structure has all the beneficial effects of the valve plug 10 since the valve plug 10 described above is included, and the beneficial effects will not be described here.

More specifically, in this embodiment, there are two liquid inlet channels and two liquid outlet channels within the pump body 20. For ease of description, the two liquid inlet channels are respectively the first liquid outlet channel 21 and the second liquid outlet channel 24, and the two liquid outlet channels are respectively the first liquid outlet channel 23 and the second liquid outlet channel 26. The first liquid inlet channel 21 and the first liquid outlet channel 23 are communicated through the first valve plug chamber 22, and the second liquid inlet channel 24 and the second liquid outlet channel 26 are communicated through the second valve plug chamber 25. The pump body 20 is also provided with one or more piston chambers 27. A liquid outlet of the first liquid outlet channel 23 communicates with the piston chamber 27, and a liquid inlet of the second liquid inlet channel 24 communicates with the piston chamber 27. The high-pressure pump structure includes two valve plugs, i.e., a first valve plug 30 and a second valve plug 40, for ease of description. The first valve plug 30 is provided in the first valve plug chamber 22, and the second valve plug 40 is provided in the second valve plug chamber 25.

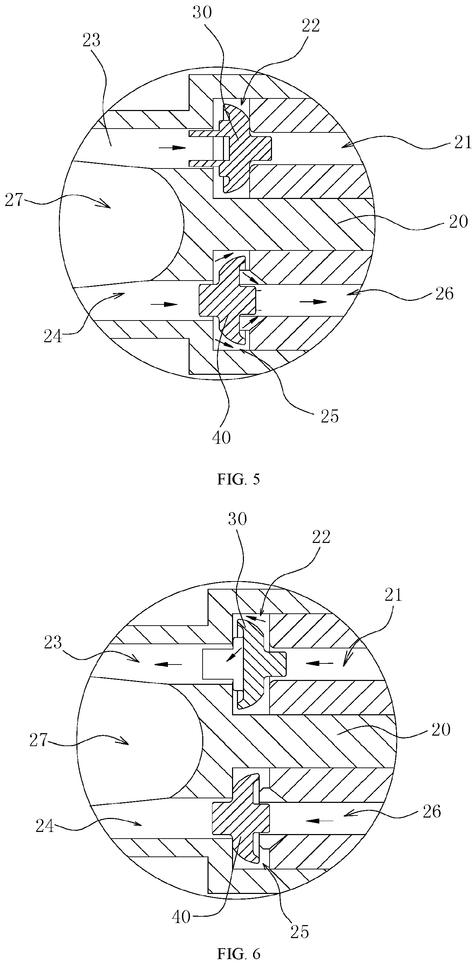

For the specific working process of the high-pressure pump structure, refer to FIGs. 5 and 6. As shown in FIG. 5, when a piston rod pushes the piston in the piston chamber 27 to move to the right, high pressure is generated in the piston chamber 27, and the flowing water pressure in the first outlet channel 23 is higher than that in the first inlet channel 21. At this time, the sealing surface of the first valve plug 30 is in tight contact with the right end surface of the first valve plug chamber 22, and the first valve plug 30 is in a closed state to block fluid communication between the liquid outlet channel 23 and the first liquid inlet channel 21. At the same time, the flowing water pressure in the second inlet channel 24 is higher than that in the second outlet channel 26, the sealing surface of the second valve plug 40 slides toward the second liquid outlet channel 26, and the second valve plug 40 is in an open state. At this time, the fluid in the piston chamber 27 flows through the second liquid inlet channel 24, the second valve plug chamber 25, and the second liquid outlet channel 26, respectively, and finally flows out in a high-pressure state. When the piston rod pulls the piston in the piston chamber 27 to move to the left, negative pressure is generated in the piston chamber 27, and the state shown in FIG. 5 is switched to the state shown in FIG. 6. The valve plug 30 moves to the left under the action of the pressure difference, so that the sealing surface of the first valve plug 30 is away from the right end surface of the first valve plug chamber 22, the step 12 at the left end of the first valve plug 30 abuts against the left end surface of the first valve plug chamber 22, and there is a gap between the left end surface of the first valve plug 30 and the left end surface of the first valve plug chamber 22, that is, the first valve plug 30 is in an open state. Low pressure liquid flows in from the first liquid inlet channel 21, flows through the first valve plug chamber 22, a recess 112, a groove 141, and the first liquid outlet channel 23 in sequence, and finally flows into the piston chamber 27. At the same time, the second valve plug 40 slides to the left, its sealing end surface is in tight contact with the left end surface of the second valve plug chamber 25, and the second valve plug 40 is in a closed state.

In this embodiment, in order to facilitate machining and assembly, a first installation chamber communicating with the first liquid outlet channel 26 is provided in the pump body 20, and a liquid inlet tube 50 is inserted in the first installation chamber. An interior of the liquid inlet tube 50 constitutes the first liquid inlet channel 21. The first valve plug chamber 22 is defined between a bottom wall of the first installation chamber and an end surface of the liquid inlet tube 50. A second installation chamber communicating with the second liquid inlet channel 24 is also provided in the pump body 20, and a liquid outlet tube 60 is inserted into the second installation chamber. An interior of the liquid outlet tube 60 constitutes the second liquid outlet channel 26. The second valve plug chamber 25 is defined between a bottom wall of the second installation chamber and an end surface of the liquid outlet tube 60.

For the same purpose, in order to more stably install the liquid inlet tube 50 and the liquid outlet tube 60 to the pump body 20, a fixing sleeve 70 is also connected to outer sides of the liquid inlet tube 50 and the liquid outlet tube 60, and the fixing sleeve 70 is sleeved outside of the pump body 20. Exemplarily, the fixing sleeve 70 includes a first fixing sleeve portion and a second fixing sleeve portion which are connected to outer sides of the liquid inlet tube 50 and the liquid outlet tube 60, respectively.

When a single piston chamber 27 is provided in the pump body, opening and closing of the first valve plug 30 and the second valve plug 40 are realized by reciprocating movement of one piston, and only water intake or water discharge can be achieved in the piston chamber 27 at one time. Therefore, in order to discharge high pressure fluid continuously, the pump body 20 is provided with at least two piston chambers 27. The first liquid inlet channel 21, the first liquid outlet channel 23, the second liquid inlet channel 24, and the second liquid outlet channel 26 provided in the pump body 20 correspond to the plurality of piston chambers 27. The first liquid inlet channels 21 communicate through a water inlet connector 80, and the second liquid outlet channels 26 communicate through a water outlet connector 90. Correspondingly, a plurality of pistons are respectively provided in the plurality of piston chambers 27, and the plurality of pistons move asynchronously, so that low pressure water flows in and high pressure water flows out continuously. In this embodiment, two piston chambers 27 are preferably provided.

A valve plug sealing method based on the above-mentioned high-pressure pump structure is provided according to a preferred embodiment of a third aspect of the invention, which comprises the following specific steps:
When fluid pressure in a liquid outlet channel is lower than fluid pressure in a liquid inlet channels, fluid impacts the valve plug to slide towards the liquid outlet channel, and an end surface of the step 12 abuts against a bottom wall of a valve plug chamber close to the liquid outlet channel, so that there is a gap between an end surface of a valve plug body 11 facing away from the sealing surface 111 and the bottom wall of the valve plug chamber, and the fluid in the liquid outlet channel flows through the valve plug chamber, a recess, and a groove, respectively, and finally flows into the liquid outlet channel, until the fluid pressure in the liquid outlet channel is balanced with the fluid pressure in the liquid inlet channel; and when the fluid pressure in the liquid outlet channel is lower than the fluid pressure in the liquid inlet channel, the fluid impacts the valve plug 10 to slide towards the liquid inlet channel; when the fluid flows through the end surface of the valve plug body 10 facing away from the sealing surface 11, a flow direction of the fluid is changed by 60 ° ~ 150 °, the fluid in a direction of a central axis of the valve plug body 11 transfers momentum to the valve plug 10, so that the sealing surface 111 of the valve plug 10 closely adheres to the bottom wall of the valve plug chamber, and communication between the liquid inlet channel and the liquid outlet channel is cut off.

In summary, a valve plug 10, a high-pressure pump structure including the same, and a valve plug sealing method based on the high-pressure pump structure are provided according to embodiments of the invention. The valve plug 10 is configured as a shape with a gradually increasing outer diameter from the one end surface to the other end surface of the valve plug body 11, which can reduce the resistance when the fluid flows from the liquid inlet channel to the liquid outlet channel, improve energy transmission efficiency of the fluid to the valve plug 10 during the closing process of the valve plug 10, so that the response time of the valve plug 10 can be shortened to improve the efficiency of a high pressure pump. In addition, the valve plug 10 has a simple structure, the sealing surface 111 of the valve plug 10 may be a variety of shapes such as a spherical surface, a conical surface or a flat surface, which can reduce machining difficulty while ensuring the sealing effect.

## Claims

1. A valve plug (10), wherein the valve plug (10) comprises a valve plug body (11), one end surface of the valve plug body (11) being configured as a sealing surface (111), and the other end surface of the valve plug body (11) facing away from the sealing surface (111) being provided with a step (12); and an outer diameter of the valve plug body (11) gradually increasing from the one end surface to the other end surface of the valve plug body,
wherein both ends of the valve plug body (11) are respectively provided with a positioning boss extending outward along a central axis of the valve plug body (11), the sealing surface (111) is provided with a first positioning boss (13) and the other end surface of the valve plug body (11) facing away the sealing surface (111) is provided with a second positioning boss (14), and the other end surface of the valve plug body (11) facing away from the sealing surface (111) is provided with a recess (112), **characterized in that**
the second positioning boss (14) is provided with a groove (141) communicating with the recess (112).

2. The valve plug (10) of claim 1, **characterised in that** the valve plug body (11) has a circular truncated cone shape.

3. The valve plug (10) of claim 1, **characterised in that** the sealing surface (111) of the valve plug body (11) is one of a flat surface, a spherical surface and a conical surface.

4. A high-pressure pump structure, **characterised in that** the high-pressure pump structure includes a pump body (20) and at least one valve plug (10) of any one of claims 1 to 3, the pump body (20) is provided with one or more liquid inlet channels and one or more liquid outlet channels which are communicated through one or more valve plug chambers, and an inner diameter of the valve plug chamber is larger than that of the liquid inlet channel and the liquid outlet channel;
the valve plug (10) is slidably disposed in the valve plug chamber, an maximum outer diameter of the valve plug is larger than inner diameters of the liquid inlet channel and the liquid outlet channel and smaller than the inner diameter of the valve plug chamber; the first positioning boss (13) is inserted into the liquid inlet channel, the second positioning boss (14) is inserted into the liquid outlet channel, an outer diameter of the first positioning boss (13) is smaller than the inner diameter of the liquid inlet channel, and an outer diameter of the second positioning boss (14) is smaller than the inner diameter of the liquid outlet channel; and
when a sealing surface (111) of the valve plug (10) is in tight contact with an end surface of the valve plug chamber close to the liquid inlet channel, communication between the liquid inlet channel and the liquid outlet channel is cut off; and when the sealing surface (111) of the valve plug (10) is far away from the end surface of the valve plug chamber close to the liquid inlet channel, an end surface of a step (12) is in tight contact with the other end surface of the valve plug chamber, and the liquid inlet channel and the liquid outlet channel communicate with each other.

5. The high-pressure pump structure of claim 4, **characterised in that** there are two liquid inlet channels and two liquid outlet channels within the pump body (20), the two liquid inlet channels are respectively a first liquid inlet channel (21) and a second liquid inlet channel (24), and the two liquid outlet channels are respectively a first liquid outlet channel (23) and a second liquid outlet channel (26); the first liquid inlet channel (21) and the first liquid outlet channel (23) communicate through a first valve plug chamber (222), and the second liquid inlet channel (24) and the second liquid outlet channel (26) communicate through a second valve plug chamber (25); one or more piston chambers (27) are also provided within the pump body (20), and the first liquid outlet channel (23) and the second liquid inlet channel (24) are both in communication with the piston chamber (27); and
the high-pressure pump structure includes two valve plugs, respectively a first valve plug (30) and a second valve plug (40), the first valve plug (30) is disposed in the first valve plug chamber (22), and the second valve plug (40) is disposed in the second valve plug chamber (25).

6. The high-pressure pump structure of claim 5, **characterised in that** a first installation chamber communicating with the first liquid outlet channel (23) is provided in the pump body (20), and a liquid inlet tube is inserted into the first installation chamber, an interior of the liquid inlet tube constitutes the first liquid inlet channel (21), and the first valve plug chamber (23) is defined between a bottom wall of the first installation chamber and an end surface of the liquid inlet tube; and
a second installation chamber communicating with the second liquid inlet channel (24) is further provided in the pump body (20), a liquid outlet tube is inserted into the second installation chamber, an interior of the liquid outlet tube constitutes the second liquid outlet channel (26), and the second valve plug chamber (25) is defined between a bottom wall of the second installation chamber and an end surface of the liquid outlet tube.

7. The high-pressure pump structure of claim 6, **characterised in that** a fixing sleeve (70) is further connected to outer sides of the liquid inlet tube and the liquid outlet tube, and the fixing sleeve (70) is sleeved outside the pump body (20).

8. The high-pressure pump structure of any one of claims 5-7, **characterised in that** the pump body (20) is provided with at least two piston chambers (207, and the first liquid inlet channel (21), the first liquid outlet channel (23), the second liquid inlet channel (24), and the second liquid outlet channel (26) provided in the pump body (20) correspond to the piston chambers; and the first liquid inlet channels (21) communicate through a water inlet connector (80), and the second liquid outlet channels (26) communicate through a water outlet connector (90).

9. A valve plug sealing method for a high-pressure pump structure of any one of claims 4-8, **characterised in that** the valve plug sealing method comprises the following steps:
when fluid pressure in a liquid outlet channel is lower than a fluid pressure in liquid inlet channel, fluid impacts the valve plug (10) to slide towards the liquid outlet channel, and an end surface of a step (12) abuts against a bottom wall of a valve plug chamber close to the liquid outlet channel, so that there is a gap between an end surface of a valve plug body (11) facing away from a sealing surface (111) of the valve plug body (10) and the bottom wall of the valve plug chamber, and the fluid in the liquid outlet channel flows through the valve plug chamber, a recess, and a groove, respectively, and finally into the liquid outlet channel, until the fluid pressure in the liquid outlet channel is balanced with the fluid pressure in the liquid inlet channel; and
when the fluid pressure in the liquid outlet channel is lower than the fluid pressure in the liquid inlet channel, the fluid impacts the valve plug (10) to slide towards the liquid inlet channel; when the fluid flows through the end surface of the valve plug body (11) facing away from the sealing surface (111), a flow direction of the fluid is changed by 60 ° ~ 150 °, the fluid in a direction of a central axis of the valve plug body (11) transfers momentum to the valve plug (10), so that the sealing surface (111) of the valve plug (10) closely adheres to the bottom wall of the valve plug chamber, and communication between the liquid inlet channel and the liquid outlet channel is cut off.

## Patentansprüche

1. Ventilstopfen (10), wobei der Ventilstopfen (10) einen Ventilstopfenkörper (11) umfasst, wobei eine Endfläche des Ventilstopfenkörpers (11) als eine Dichtfläche (111) ausgelegt ist und die andere Endfläche des Ventilstopfenkörpers (11), die von der Dichtfläche (111) weg zeigt, mit einer Stufe (12) versehen ist; und ein Außendurchmesser des Ventilstopfenkörpers (11) allmählich von der einen Endfläche zur anderen Endfläche des Ventilstopfenkörpers ansteigt,
wobei beide Enden des Ventilstopfenkörpers (11) jeweils mit einem Positionierungsvorsprung versehen sind, der nach außen entlang einer Mittelachse des Ventilstopfenkörpers (11) verläuft, die Dichtfläche (111) mit einem ersten Positionierungsvorsprung (13) versehen ist und die andere, von der Dichtfläche (111) weg zeigende Endfläche des Ventilstopfenkörpers (11) mit einem zweiten Positionierungsvorsprung (14) versehen ist, und die andere, von der Dichtfläche (111) weg zeigende Endfläche des Ventilstopfenkörpers (11) mit einer Vertiefung (112) versehen ist, **dadurch gekennzeichnet, dass** der zweite Positionierungsvorsprung (14) mit einer Nut (141) versehen ist, die mit der Vertiefung (112) in Verbindung steht.

2. Ventilstopfen (10) nach Anspruch 1, **dadurch gekennzeichnet, dass** der Ventilstopfenkörper (11) eine kreisförmige Kegelstumpfform aufweist.

3. Ventilstopfen (10) nach Anspruch 1, **dadurch gekennzeichnet, dass** die Dichtfläche (111) des Ventilstopfenkörpers (11) entweder eine flache Oberfläche, eine sphärische Oberfläche oder eine konische Oberfläche ist.

4. Hochdruckpumpenstruktur, **dadurch gekennzeichnet, dass** die Hochdruckpumpenstruktur einen Pumpenkörper (20) und mindestens einen Ventilstopfen (10) nach einem der Ansprüche 1 bis 3 beinhaltet, wobei der Pumpenkörper (20) mit einem oder mehreren Flüssigkeitseinlasskanälen und einem oder mehreren Flüssigkeitsauslasskanälen versehen ist, die durch eine oder mehrere Ventilstopfenkammern in Verbindung stehen, und ein Innendurchmesser der Ventilstopfenkammer größer als der des Flüssigkeitseinlasskanals und des Flüssigkeitsauslasskanals ist;
wobei der Ventilstopfen (10) gleitend in der Ventilstopfenkammer angeordnet ist, ein maximaler Außendurchmesser des Ventilstopfens größer als Innendurchmesser des Flüssigkeitseinlasskanals und des Flüssigkeitsauslasskanals und kleiner als der Innendurchmesser der Ventilstopfenkammer ist; der erste Positionierungsvorsprung (13) in den Flüssigkeitseinlasskanal eingesetzt ist, der zweite Positionierungsvorsprung (14) in den Flüssigkeitsauslasskanal eingesetzt ist, ein Außendurchmesser des ersten Positionierungsvorsprungs (13) kleiner als der Innendurchmesser des Flüssigkeitseinlasskanals ist und ein Außendurchmesser des zweiten Positionierungsvorsprungs (14) kleiner als der Innendurchmesser des Flüssigkeitsauslasskanals ist; und
wenn eine Dichtfläche (111) des Ventilstopfens (10) in engem Kontakt mit einer Endfläche der Ventilstopfenkammer nahe dem Flüssigkeitseinlasskanal steht, eine Verbindung zwischen dem Flüssigkeitseinlasskanal und dem Flüssigkeitsauslasskanal getrennt wird; und wenn die Dichtfläche (111) des Ventilstopfens (10) sich weit von der Endfläche der Ventilstopfenkammer nahe dem Flüssigkeitseinlasskanal befindet, eine Endfläche einer Stufe (12) in engem Kontakt mit der anderen Endfläche der Ventilstopfenkammer steht und der Flüssigkeitseinlasskanal und der Flüssigkeitsauslasskanal miteinander in Verbindung stehen.

5. Hochdruckpumpenstruktur nach Anspruch 4, **dadurch gekennzeichnet, dass** es zwei Flüssigkeitseinlasskanäle und zwei Flüssigkeitsauslasskanäle innerhalb des Pumpenkörpers (20) gibt, die zwei Flüssigkeitseinlasskanäle ein erster Flüssigkeitseinlasskanal (21) bzw. ein zweiter Flüssigkeitseinlasskanal (24) sind und die zwei Flüssigkeitsauslasskanäle ein erster Flüssigkeitsauslasskanal (23) bzw. ein zweiter Flüssigkeitsauslasskanal (26) sind; der erste Flüssigkeitseinlasskanal (21) und der erste Flüssigkeitsauslasskanal (23) über eine erste Ventilstopfenkammer (222) in Verbindung stehen und der zweite Flüssigkeitseinlasskanal (24) und der zweite Flüssigkeitsauslasskanal (26) über eine zweite Ventilstopfenkammer (25) in Verbindung stehen; eine oder mehrere Kolbenkammern (27) auch innerhalb des Pumpenkörpers (20) vorgesehen sind und der erste Flüssigkeitsauslasskanal (23) und der zweite Flüssigkeitseinlasskanal (24) beide in Verbindung mit der Kolbenkammer (27) stehen; und
die Hochdruckpumpenstruktur zwei Ventilstopfen beinhaltet, einen ersten Ventilstopfen (30) bzw. einen zweiten Ventilstopfen (40), wobei der erste Ventilstopfen (30) in der ersten Ventilstopfenkammer (22) angeordnet ist und der zweite Ventilstopfen (40) in der zweiten Ventilstopfenkammer (25) angeordnet ist.

6. Hochdruckpumpenstruktur nach Anspruch 5, **dadurch gekennzeichnet, dass** eine erste Installationskammer, die mit dem ersten Flüssigkeitsauslasskanal (23) in Verbindung steht, im Pumpenkörper (20) vorgesehen ist und ein Flüssigkeitseinlassrohr in die erste Installationskammer eingesetzt ist, ein Inneres des Flüssigkeitseinlassrohrs den ersten Flüssigkeitseinlasskanal (21) bildet und die erste Ventilstopfenkammer (23) zwischen einer Bodenwand der ersten Installationskammer und einer Endfläche des Flüssigkeitseinlassrohrs definiert ist; und
eine zweite Installationskammer, die mit dem zweiten Flüssigkeitseinlasskanal (24) in Verbindung steht, ferner im Pumpenkörper (20) vorgesehen ist, ein Flüssigkeitsauslassrohr in die zweite Installationskammer eingesetzt ist, ein Inneres des Flüssigkeitsauslassrohrs den zweiten Flüssigkeitsauslasskanal (26) bildet und die zweite Ventilstopfenkammer (25) zwischen einer Bodenwand der zweiten Installationskammer und einer Endfläche des Flüssigkeitsauslassrohrs definiert ist.

7. Hochdruckpumpenstruktur nach Anspruch 6, **dadurch gekennzeichnet, dass** eine Fixierhülse (70) ferner mit Außenseiten des Flüssigkeitseinlassrohrs und des Flüssigkeitsauslassrohrs verbunden ist und die Fixierhülse (70) außerhalb des Pumpenkörpers (20) ummantelt ist.

8. Hochdruckpumpenstruktur nach einem der Ansprüche 5-7, **dadurch gekennzeichnet, dass** der Pumpenkörper (20) mit mindestens zwei Kolbenkammern (207) versehen ist und der erste Flüssigkeitseinlasskanal (21), der erste Flüssigkeitsauslasskanal (23), der zweite Flüssigkeitseinlasskanal (24) und der zweite Flüssigkeitsauslasskanal (26), die im Pumpenkörper (20) vorgesehen sind, den Kolbenkammern entsprechen; und die ersten Flüssigkeitseinlasskanäle (21) über einen Wassereinlassanschluss (80) in Verbindung stehen und die zweiten Flüssigkeitsauslasskanäle (26) über einen Wasserauslassanschluss (90) in Verbindung stehen.

9. Ventilstopfenabdichtungsverfahren für eine Hochdruckpumpenstruktur nach einem der Ansprüche 4-8, **dadurch gekennzeichnet, dass** das Ventilstopfenabdichtungsverfahren die folgenden Schritte umfasst:
wenn ein Fluiddruck in einem Flüssigkeitsauslasskanal geringer als ein Fluiddruck in einem Flüssigkeitseinlasskanal ist, Fluid auf den Ventilstopfen (10) trifft, sodass es zum Flüssigkeitsauslasskanal gleitet, und eine Endfläche einer Stufe (12) an eine Bodenwand einer Ventilstopfenkammer nahe dem Flüssigkeitsauslasskanal stößt, sodass es eine Lücke zwischen einer Endfläche eines Ventilstopfenkörpers (11) gibt, die von einer Dichtfläche (111) des Ventilstopfenkörpers (10) und der Bodenwand der Ventilstopfenkammer weg zeigt, und das Fluid im Flüssigkeitsauslasskanal jeweils durch die Ventilstopfenkammer, eine Vertiefung und eine Nut und schließlich in den Flüssigkeitsauslasskanal strömt, bis der Fluiddruck im Flüssigkeitsauslasskanal mit dem Fluiddruck im Flüssigkeitseinlasskanal ausgeglichen ist; und
wenn der Fluiddruck im Flüssigkeitsauslasskanal geringer als der Fluiddruck im Flüssigkeitseinlasskanal ist, das Fluid auf den Ventilstopfen (10) trifft, sodass es zum Flüssigkeitseinlass gleitet; wenn das Fluid durch die Endfläche des Ventilstopfenkörpers (11) strömt, die von der Dichtfläche (111) weg zeigt, eine Strömungsrichtung des Fluids um 60°~150° geändert wird, das Fluid in einer Richtung einer Mittelachse des Ventilstopfenkörpers (11) einen Impuls auf den Ventilstopfen (10) überträgt, sodass die Dichtfläche (111) des Ventilstopfens (10) eng an der Bodenwand der Ventilstopfenkammer anhaftet und eine Verbindung zwischen dem Flüssigkeitseinlasskanal und dem Flüssigkeitsauslasskanal getrennt wird.

## Revendications

1. Obturateur de vanne (10), dans lequel l'obturateur de vanne (10) comprend un corps d'obturateur de vanne (11), une surface d'extrémité du corps d'obturateur de vanne (11) étant configurée en tant que surface d'obturation (111), et l'autre surface d'extrémité du corps d'obturateur de vanne (11) détournée de la surface d'obturation (111) étant pourvue d'un gradin (12) ; et un diamètre externe du corps d'obturateur de vanne (11) augmentant progressivement de la surface d'extrémité en question à l'autre surface d'extrémité du corps d'obturateur de vanne,
dans lequel les deux extrémités du corps d'obturateur de vanne (11) sont respectivement pourvues d'un bossage de positionnement s'étendant vers l'extérieur le long d'un axe central du corps d'obturateur de vanne (11), la surface d'obturation (111) est pourvue d'un premier bossage de positionnement (13) et l'autre surface d'extrémité du corps d'obturateur de vanne (11) détournée de la surface d'obturation (111) est pourvue d'un second bossage de positionnement (14), et l'autre surface d'extrémité du corps d'obturateur de vanne (11) détournée de la surface d'obturation (111) est pourvue d'un retrait (112), **caractérisé en ce que**
le second bossage de positionnement (14) est pourvu d'une rainure (141) communiquant avec le retrait (112).

2. Obturateur de vanne (10) selon la revendication 1, **caractérisé en ce que** le corps d'obturateur de vanne (11) a une forme tronconique circulaire.

3. Obturateur de vanne (10) selon la revendication 1, **caractérisé en ce que** la surface d'obturation (111) du corps d'obturateur de vanne (11) est une d'une surface plate, d'une surface sphérique et d'une surface conique.

4. Structure de pompe haute pression, **caractérisée en ce que** la structure de pompe haute pression inclut un corps de pompe (20) et au moins un obturateur de vanne (10) selon l'une quelconque des revendications 1 à 3, le corps de pompe (20) est pourvu d'un ou plusieurs canaux d'entrée de liquide et d'un ou plusieurs canaux de sortie de liquide qui sont en communication à travers une ou plusieurs chambres d'obturateur de vanne, et un diamètre interne de la chambre d'obturateur de vanne est supérieur à celui du canal d'entrée de liquide et du canal de sortie de liquide ;
l'obturateur de vanne (10) est disposé à coulissement dans la chambre d'obturateur de vanne, un diamètre externe maximal de l'obturateur de vanne est supérieur à des diamètres internes du canal d'entrée de liquide et du canal de sortie de liquide, et inférieur au diamètre interne de la chambre d'obturateur de vanne ; le premier bossage de positionnement (13) est inséré dans le canal d'entrée de liquide, le second bossage de positionnement (14) est inséré dans le canal de sortie de liquide, un diamètre externe du premier bossage de positionnement (13) est inférieur au diamètre interne du canal d'entrée de liquide, et un diamètre externe du second bossage de positionnement (14) est inférieur au diamètre interne du canal de sortie de liquide ; et
lorsqu'une surface d'obturation (111) de l'obturateur de vanne (10) est en contact étroit avec une surface d'extrémité de la chambre d'obturateur de vanne proche du canal d'entrée de liquide, une communication entre le canal d'entrée de liquide et le canal de sortie de liquide est coupée ; et lorsque la surface d'obturation (111) de l'obturateur de vanne (10) est éloignée de la surface d'extrémité de la chambre d'obturateur de vanne proche du canal d'entrée de liquide, une surface d'extrémité d'un gradin (12) est en contact étroit avec l'autre surface d'extrémité de la chambre d'obturateur de vanne, et le canal d'entrée de liquide et le canal de sortie de liquide communiquent l'un avec l'autre.

5. Structure de pompe haute pression selon la revendication 4, **caractérisée en ce qu'**il y a deux canaux d'entrée de liquide et deux canaux de sortie de liquide au sein du corps de pompe (20), les deux canaux d'entrée de liquide sont respectivement un premier canal d'entrée de liquide (21) et un second canal d'entrée de liquide (24), et les deux canaux de sortie de liquide sont respectivement un premier canal de sortie de liquide (23) et un second canal de sortie de liquide (26) ; le premier canal d'entrée de liquide (21) et le premier canal de sortie de liquide (23) communiquent à travers une première chambre d'obturateur de vanne (222), et le second canal d'entrée de liquide (24) et le second canal de sortie de liquide (26) communiquent à travers une seconde chambre d'obturateur de vanne (25) ; une ou plusieurs chambres de piston (27) sont également prévues au sein du corps de pompe (20), et le premier canal de sortie de liquide (23) et le second canal d'entrée de liquide (24) sont tous deux en communication avec la chambre de piston (27) ; et
la structure de pompe haute pression inclut deux obturateurs de vanne, respectivement un premier obturateur de vanne (30) et un second obturateur de vanne (40), le premier obturateur de vanne (30) est disposé dans la première chambre d'obturateur de vanne (22), et le second obturateur de vanne (40) est disposé dans la seconde chambre d'obturateur de vanne (25).

6. Structure de pompe haute pression selon la revendication 5, **caractérisée en ce qu'**une première chambre d'installation communiquant avec le premier canal de sortie de liquide (23) est prévue dans le corps de pompe (20), et un tube d'entrée de liquide est inséré dans la première chambre d'installation, un intérieur du tube d'entrée de liquide constitue le premier canal d'entrée de liquide (21), et la première chambre d'obturateur de vanne (23) est définie entre une paroi inférieure de la première chambre d'installation et une surface d'extrémité du tube d'entrée de liquide ; et
une seconde chambre d'installation communiquant avec le second canal d'entrée de liquide (24) est en outre prévue dans le corps de pompe (20), un tube de sortie de liquide est inséré dans la seconde chambre d'installation, un intérieur du tube de sortie de liquide constitue le second canal de sortie de liquide (26), et la seconde chambre d'obturateur de vanne (25) est définie entre une paroi inférieure de la seconde chambre d'installation et une surface d'extrémité du tube de sortie de liquide.

7. Structure de pompe haute pression selon la revendication 6, **caractérisée en ce qu'**un manchon de fixation (70) est en outre connecté à des côtés externes du tube d'entrée de liquide et du tube de sortie de liquide, et le manchon de fixation (70) est manchonné en dehors du corps de pompe (20).

8. Structure de pompe haute pression selon l'une quelconque des revendications 5 à 7, **caractérisée en ce que** le corps de pompe (20) est pourvu d'au moins deux chambres de piston (207), et le premier canal d'entrée de liquide (21), le premier canal de sortie de liquide (23), le second canal d'entrée de liquide (24) et le second canal de sortie de liquide (26) prévus dans le corps de pompe (20) correspondent aux chambres de piston ; et les premiers canaux d'entrée de liquide (21) communiquent à travers un connecteur d'entrée d'eau (80), et les seconds canaux de sortie de liquide (26) communiquent à travers un connecteur de sortie d'eau (90).

9. Procédé d'obturation d'obturateur de vanne pour une structure de pompe haute pression selon l'une quelconque des revendications 4 à 8, **caractérisé en ce que** le procédé d'obturation d'obturateur de vanne comprend les étapes suivantes :
lorsque de la pression fluidique dans un canal de sortie de liquide est inférieure à une pression fluidique dans un canal d'entrée de liquide, du fluide impacte l'obturateur de vanne (10) à coulisser vers le canal de sortie de liquide, et une surface d'extrémité d'un gradin (12) bute contre une paroi inférieure d'une chambre d'obturateur de vanne proche du canal de sortie de liquide, de sorte qu'il y a un espace entre une surface d'extrémité d'un corps d'obturateur de vanne (11) détournée d'une surface d'obturation (111) du corps d'obturateur de vanne (10) et la paroi inférieure de la chambre d'obturateur de vanne, et le fluide dans le canal de sortie de liquide s'écoule à travers la chambre d'obturateur de vanne, un retrait, et une rainure, respectivement, et finalement dans le canal de sortie de liquide, jusqu'à ce que la pression fluidique dans le canal de sortie de liquide soit équilibrée avec la pression fluidique dans le canal d'entrée de liquide ; et
lorsque la pression fluidique dans le canal de sortie de liquide est inférieure à la pression fluidique dans le canal d'entrée de liquide, le fluide impacte l'obturateur de vanne (10) à coulisser vers le canal d'entrée de liquide ; lorsque le fluide s'écoule à travers la surface d'extrémité du corps d'obturateur de vanne (11) détournée de la surface d'obturation (111), une direction d'écoulement du fluide est changée de 60 ° ~ 150 °, le fluide dans une direction d'un axe central du corps d'obturateur de vanne (11) transfère une quantité de mouvement à l'obturateur de vanne (10), de sorte que la surface d'obturation (111) de l'obturateur de vanne (10) adhère étroitement à la paroi inférieure de la chambre d'obturateur de vanne, et la communication entre le canal d'entrée de liquide et le canal de sortie de liquide est coupée.
